# EUROPEAN PATENT APPLICATION

(11) **EP 3 795 960 A1**
(43) Date of publication of application: **24.03.2021**
(21) Application number: 19306137.1
(22) Date of filing: 19.09.2019
(51) Int. Cl.: G01H 9/00, G01M 11/00, H04B 10/071

(54) **DEVICE AND METHOD FOR MONITORING AN OPTICAL SYSTEM**

(71) Applicant: Nokia Technologies Oy, 02610 Espoo (FI)
(72) Inventor: DORIZE, Christian, 78320 Le Mesnil St Denis (FR); AWWAD, Elie, 92160 Antony (FR)
(74) Representative: Bryers LLP

(57) **Abstract**

An optical monitoring device (101) comprising:
- an optical transmitter (103),
- an optical receiver (105),
- an optical waveguide (107) comprising a plurality of reflectors,
- the optical transmitter (103) being configurable to transmit on the optical waveguide:
∘ a first sweep signal modulating a first polarization mode of said optical waveguide (107), and
∘ a second sweep signal modulating a second polarization mode of said optical waveguide (107),

- the optical receiver (105) being configurable to receive:
∘ a first plurality of reflections corresponding to the first sweep signal being reflected by the plurality of reflectors, and
∘ a second plurality of reflections corresponding to the second sweep signal being reflected by the plurality of reflectors,

a processing unit (131) configurable to process the first plurality of reflections according to the first sweep signal, and to process the second plurality of reflections according to the second sweep signal, for determining an event that occurred on the optical waveguide (107).

## Description

### TECHNICAL FIELD

Various example embodiments relate to optical technologies, in particular to optical sensing.

### BACKGROUND

Telecommunication architectures and infrastructures are relying more and more on optical communication. Optical mediums are deployed in a broad variety of scenario, such as in metropolitan area, datacenters, long haul transport, as they offer reliable multi gigabit transmissions.

Optical systems often require a monitoring system to ensure their operational efficiency. For example, manipulations or vibrations on an optical fiber of an optical system may introduce degradation in the delivered service, and ultimately may lead to a broken optical fiber with a complete outage.

Relating to these problematics, another field of application for optical technologies lies in their sensing capabilities, which could be involved in the monitoring of optical systems. Optical techniques are particularly adapted in distributed sensing which relies in probing a line that includes a series of sensors at various locations along said line. Distributed optical sensing networks are usually based on interferometry of light pulses propagating along the line to be probed.

For the purpose of optical sensing, dedicated or adapted optical fibers including reflectors such a Fiber Bragg Gratings may be used. In other cases, where the optical medium cannot be modified, the optical sensing takes advantage of the Rayleigh backscattering effect wherein anomalies in the optical medium generate reflections of a transiting optical signal. This Rayleigh backscattering effect may be exploited in standard single mode fibers as used in telecommunications field.

Given the random distribution of the impurities or anomalies involved in the Rayleigh backscattering effect, the characterization of the optical medium is crucial. The determination of the impulse response of the optical medium including the Rayleigh backscattering effect helps in the characterization of the optical medium. Numerous measurements at different time intervals are needed for the determination of the impulse response as it depends on the length of the optical medium, and to avoid mixing different measurements for which reflections may collide.

It is then needed to improve optical monitoring using inner reflections of optical medium.

### SUMMARY

Example embodiments of the invention aims to remedy all or some of the disadvantages of the above identified prior art.

The embodiments and features, if any, described in this specification that do not fall under the scope of the independent claims are to be interpreted as examples useful for understanding various embodiments of the invention.

It is particularly proposed to a device and method for monitoring an optical system.

A first example embodiment relates then to an optical monitoring device comprising:
- an optical transmitter,
- an optical receiver,
- an optical waveguide comprising a plurality of reflectors,
- the optical transmitter being configurable to transmit on the optical waveguide:
   ∘ a first sweep signal modulating a first polarization mode of said optical waveguide, and
   ∘ a second sweep signal modulating a second polarization mode of said optical waveguide,
- the optical receiver being configurable to receive:
   ∘ a first plurality of reflections corresponding to the first sweep signal being reflected by the plurality of reflectors, and
   ∘ a second plurality of reflections corresponding to the second sweep signal being reflected by the plurality of reflectors,
- a processing unit configurable to process the first plurality of reflections according to the first sweep signal, and to process the second plurality of reflections according to the second sweep signal, for determining an event that occurred on the optical waveguide.

Thus, thanks to these features, the optical monitoring device is enabled to transmit the first sweep signal and the second sweep signal on the optical fiber, and to receive reflections of said first sweep signal and second sweep signal. The first sweep signal and the second sweep signal are advantageously used as probing signals for monitoring the optical fiber. The optical monitoring device is further enabled to process the received reflections according to the first sweep signal and the second sweep signal. Such processing allows to determine an event that occurred on the optical fiber. It is possible thanks to this determination to detect a mechanical movement or vibration that occurred or currently occurring on the optical fiber.

Another example embodiment relates also to a method for monitoring an optical waveguide, said optical waveguide connecting an optical transmitter and an optical receiver, said optical waveguide comprising a plurality of reflectors, the method comprising the following steps:
- generating a first sweep signal and a second sweep signal,
- transmitting a first polarization mode of the optical waveguide modulated with the first sweep signal,
- transmitting a second polarization mode of the optical waveguide modulated with the second sweep signal,
- receiving a first plurality of reflections corresponding to the first sweep signal being reflected by the plurality of reflectors,
- receiving a second plurality of reflections corresponding to the second sweep signal being reflected by the plurality of reflectors,
- processing the first plurality of reflections according to the first sweep signal, and processing the second plurality of reflections according to the second sweep signal, for determining and event that occurred on the optical waveguide.

Thus, thanks to these features, the method for monitoring an optical fiber offers to generate and transmit first sweep signal and second sweep signal over the optical fiber. Said first sweep signal and second sweep signal are transmitted for the purpose of monitoring the optical fiber. They are reflected by said optical fiber back to the optical receiver which is enabled to process the received reflections according to the first sweep signal and the second sweep signal. Such processing allows to determine an event that occurred or is currently occurring on the optical fiber. Advantageously, it is then possible to monitor events occurring on an optical fiber.

According to various embodiments the optical monitoring device, the method for monitoring an optical fiber, further respectively comprises one or more of the following features below, which should be considered in any possible technical combinations:
- the optical transmitter is further configurable:
   ∘ to generate a digital sequence,
   ∘ to generate the first sweep signal based on a first portion of the digital sequence,
   ∘ to generate the second sweep signal based on a second portion of the digital sequence,
- the optical transmitter is further configurable:
   ∘ to generate the first sweep signal based on the second portion of the digital sequence,
   ∘ to generate the second sweep signal based on the first portion of the digital sequence,
- the optical transmitter is further configurable:
   ∘ to select the first portion of the digital sequence, and
   ∘ to select the second portion of the digital sequence according to a length of the digital sequence,
- the optical transmitter is further configurable:
   ∘ to select the first portion according to the first half of the digital sequence, and
   ∘ to select the second portion according to the second half of the digital sequence,
- the processing unit is configurable:
   ∘ to correlate the first plurality of reflections with the first sweep signal, and,
   ∘ to correlate the second plurality of reflections with the second sweep signal,
   ∘ for determining the event that occurred on the optical waveguide,
- the optical transmitter is configurable:
   ∘ to modulate the first polarization with the first sweep signal based on a first substantially linear frequency sweep signal, and
   ∘ to modulate the second polarization with the second sweep signal based on a second substantially linear frequency sweep signal,
- the first substantially linear frequency sweep signal is based on the first portion of the digital sequence, and the second substantially linear frequency sweep signal is based on the second portion of the digital sequence,
- the first portion of the digital sequence is based on a first half of said digital sequence, and the second portion of the digital sequence is based on a second half of said digital sequence, and the optical transmitter is configurable to transmit simultaneously the first sweep signal and the second sweep signal,
- the optical transmitter is configurable:
   ∘ to modulate the first polarization mode with the first sweep signal based on a first Phase Shift Keying coded signal, and
   ∘ to modulate the second polarization mode with the second sweep signal based on a second Phase Shift Keying coded signal,
- the first Phase Shift Keying coded signal is based on the first portion of the digital sequence, and the second Phase Shift Keying coded signal is based on the second portion of the digital sequence,
- the first portion of the digital sequence is based on a first half of said digital sequence, and the second portion of the digital sequence is based on a second half of said digital sequence, and the optical transmitter is configurable to transmit substantially simultaneously the first sweep signal and the second sweep signal,
- the first Phase Shift Keying coded signal and the second Phase Shift Keying coded signal are comprised in a sequence of constant amplitude zero-autocorrelation codes.

### BRIEF DESCRIPTION OF THE DRAWINGS

Some example embodiments are now described, by way of example only, and with reference to the accompanying drawings in which:
- FIG. 1 is a schematic block of an optical monitoring device according to an embodiment,
- FIG. 2 is a schematic block of an optical monitoring device according to another embodiment,
- FIG. 3 is a diagram of a time-frequency analysis of optical signals obtained by an optical monitoring device according to an embodiment,
- FIG. 4 is a diagram of processing results obtained by an optical monitoring device according to an embodiment,
- FIG. 5 is a diagram of resulting errors obtained by an optical monitoring device according to an embodiment.

The same reference number represents the same element to the same type of element on all drawings, unless stated otherwise.

### DETAILLED DESCRIPTION

The figures and the following description illustrate specific exemplary embodiments of the invention. It will thus be appreciated that those skilled in the art will be able to devise various arrangements that, although not explicitly described or shown herein, embody the principles of the invention and are included within the scope of the invention. Furthermore, any examples described herein are intended to aid in understanding the principles of the invention, and are to be construed as being without limitation to such specifically recited examples and conditions. As a result, the invention is not limited to the specific embodiments or examples described below, but by the claims and their equivalents.

In the following description, well-known functions or constructions by the man skilled in the art are not described in detail since they would obscure the invention in unnecessary detail.

In the following description of the figures, schematic representations are non-limiting and serve only for the understanding of the invention.

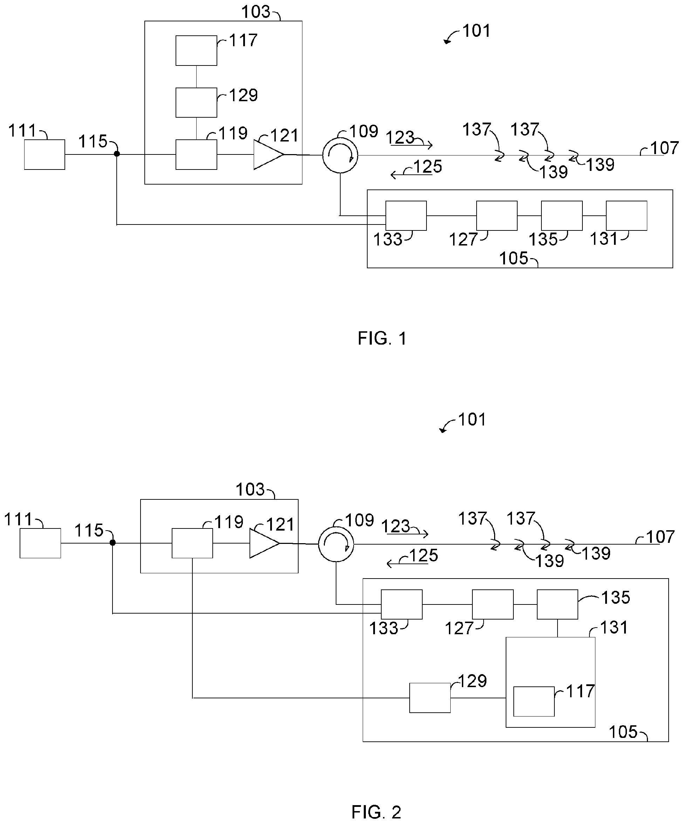

Referring to figures FIG. 1, a schematic block of an optical monitoring device according to an embodiment is depicted.

In an embodiment, an optical monitoring device 101 is enabled to monitor event that occurred or that are occurring on an optical medium 107. In an example, the optical medium 107 is a single mode fiber or a multimode fiber. The optical medium 107, hereinafter also referred as optical fiber 107 or optical waveguide 107, connects an optical transmitter 103 to an optical receiver 105 that are comprised in the optical monitoring device 101. In an example, the optical transmitter 103 and the optical receiver 105 are respectively a coherent transmitter and a coherent receiver.

The optical monitoring device 101 further comprises a laser source 111 which feeds the optical transmitter 103. In an example, the laser source 111 is a coherent source that generates a continuous wavelength in a dedicated wavelength range, or in the C-band or in the L-band, as ITU standardized optical channels around 1550nm and 1310nm wavelengths. The wavelength emitted by the laser source 111 is chosen based on the type of the optical waveguide, which is usually dependent on the type of the application (telecommunication, security, medical field, etc.).

The laser source 111 is further connected to the optical receiver 105 through an optical coupler 115.

In an example, the laser source 111 is a coherent source, the optical transmitter 103 is a coherent transmitter and the optical receiver 105 is a coherent receiver, the optical coupler 115 allowing the optical transmitter and the optical receiver to be synchronized with the laser source 111.

The optical transmitter 103 generates an optical sounding signal 123 to be transmitted along the optical waveguide 107. The optical transmitter 103 provides said optical sounding signal 123 to an optical circulator 109 connected to the optical waveguide 107.

The optical sounding signal 123 transits along the optical waveguide 107. Portions of said optical sounding signal 123 are reflected by randomly disturbed Rayleigh backscattering spots that exists in the optical waveguide 107 as imperfections during its fabrication process for example. These reflections are comprised in a reflected optical signal 125.

Reflections of the optical signal propagates over the optical waveguide 107 in the opposite direction as said optical signal and reaches optical circulator 109.

The optical receiver 105 is connected to the optical waveguide 107 through the optical circulator 109,and receives the reflections of the optical signal through the reflected optical signal 125.

The optical receiver 105 is adapted to process the received reflections for determining that an event has occurred, or perhaps is still occurring, on the optical waveguide 107.

The optical transmitter 103 further comprises a sweep signal generator 117, for generating sweep signals. It is meant by sweep signal, a waveform that has properties that enables an efficient sounding or probing of the optical waveguide 107 as will be described hereinafter. Advantageously the properties of the waveform such as a sweep signal enables to perform the monitoring of an optical waveguide to allow the detection of an event. The notion of sweep signal encompasses families of signal with an instantaneous frequency that varies in a continuous manner over time.

In an example, the sweep signal generator 117 comprises a Digital Signal Processor comprising signal processing abilities or is a Field Gate Programmable Array configured with logical circuitries adapted to the generation of signals.

The sweep signal generator 117 further comprises a Digital to Analog Converter (DAC) 129 adapted to convert the generated sweep signals from the digital domain to the analog domain.

In an embodiment, the DAC 129 comprises two outputs, each input corresponding to an input of an optical modulator 119, each input corresponding to a polarization mode of the optical waveguide 107.

In another embodiment, the DAC 129 comprises four outputs, each pair of outputs corresponding to a pair of inputs of the optical modulator 119, each pair of inputs corresponding to a polarization mode of the optical waveguide 107, and each inputs of a pair corresponding respectively to in-phase and in-quadrature components of a complex signal.

The sweep signal generator 117 provides the sweep signals to an optical modulator 119 enabled to modulate the continuous wavelength provided by the laser source 111 with said sweep signal.

The optical modulator 119 modulates the optical signal provided by the laser source 111 with the first sweep signal on a first polarization axis. The optical modulator 119 also modulates the optical signal provided by the laser source 111 with the second sweep signal on a second polarization axis. The first polarization axis and the second polarization are orthogonal polarization axis. The optical modulator 119 outputs a modulated optical signal to be transmitted as the optical sounding signal 123 on the optical waveguide 107. In an example, the optical transmitter 103 further comprises an optical amplifier 121 adapted to amplify the output of the optical modulator 121 prior to transmitting the optical sounding signal 123 on the optical fiber 107. Such optical amplifier 121 is an Erbium Doped Fiber Amplifier in an example.

The laser source 111 provides its optical signal to the optical transmitter 103, for being modulated with the sweep signal, and to the optical receiver 105.

In an example wherein the optical monitoring device 101 operates with coherent optical signals, the optical receiver 105 comprises a 90° hybrid coherent mixer 133 which is fed by the optical signal from the laser source 111 and is also provided with the reflected optical signal 125 by the optical circulator 109.

The optical receiver 105 further comprises an array of photodiodes 127. In an example, the array of photodiodes 127 comprises four balanced photodiodes, disposed in a scheme adapted for receiving a reflected optical signal 127 comprising in-phase and in-quadrature components for each of the two polarization modes of the optical waveguide 107. In an example the optical receiver 105 further comprises an analog to digital converter 135 configurable to convert from the analog domain to the digital domain the outputs from the array of photodiodes 127.

The optical receiver 105 further comprises a processing unit 131 adapted to process the received reflected optical signal 127. Based on such processing, the processing unit 131 is adapted to determine an event, such a vibration, a displacement, that occurred on the optical waveguide 107.

The optical waveguide 107 has a length L_{f}. In order to monitor said optical waveguide 107, the corresponding impulse response of said medium is monitored on a substantially regular basis. For characterizing the impulse response of the optical waveguide 107, it is needed to send a test optical signal so that it propagates in a direction of the optical waveguide, and then in the opposite direction. Therefore, the impulse response of the optical waveguide 107 spreads over 2L_{f}. corresponding to the roundtrip, which can be translated into time unit by dividing the distance by the celerity c_{f} of light in the optical waveguide 107. For probing the optical waveguide through the determining of its impulse response, two successive measurements should be separated by a period longer than the time spreading 2L_{f}/c_{f} of the optical waveguide in order to avoid overlapping of the measurements. This constraint fixes a limit for the number of measurements that can be achieved per second, and so the maximal bandwidth BW=1/(2(2L_{f}/c_{f})) for the events such as vibration or pressure change that can be captured along the optical waveguide 107. The stability of the laser source that emits the test optical signal for sounding the optical waveguide 107 is a key aspect as the coherence length L_{c} of the laser source yields the achievable distance over which information can be captured in the optical waveguide 107. A suitable laser source for sounding the optical waveguide 107 shall then meet the constraint L_{f}<L_{c}/2.

In an example, the optical waveguide 107 and the optical monitoring device 101 are used to monitor ground comprising oil & gas resources. The symbol frequency of the sounding signal is determined as f_{symb}=100MHz. The coherence time of the laser source 109 is then in the magnitude of 10⁻⁵s corresponding to a spectral line width of 100 kHz.

In an example, the optical waveguide 107 and the optical monitoring device 101 are used in medical application. The reflections are achieved with Rayleigh effect with a symbol rate is then f_{symb}=10GHz offering a resolution of 1 to 10cm, for a length=1m for the optical waveguide 107. The coherence time of the laser source 111 is the magnitude of 10⁻⁷s corresponding to a spectral line width of 10 MHz.

Referring to figures FIG. 2, a schematic block of an optical monitoring device according to another embodiment is depicted.

The figure FIG. 2 depicts an alternate arrangement of the entities presented in figure FIG. 1.

In an embodiment, the optical monitoring device 101 comprises the optical transmitter 103, the optical receiver 105, the optical waveguide 107, the laser source 111 and the processing unit 131.

The processing unit 131 comprises the signal generator 117 with signal processing functions enabling operations for the transmitting and receiving functionalities of the optical monitoring device 101.

The processing unit 131 cooperating with the signal generator 117 is adapted to generate the sweep signals and to provide them to the optical modulator 119 from the optical transmitter 103. As depicted for figure FIG. 1, the processing unit 131 is also adapted to process the reflected optical signal 125 resulting in the reflections of the optical sounding signal 123 by the distributed reflectors of the optical waveguide 107. It is meant by distributed reflectors, optical means associated with the optical waveguide 107 that reflects partially the light propagating over said optical waveguide 107. In an example the distributed reflectors are a plurality of anomalies or impurities in the optical waveguide 107 that reflects light. In another example the distributed reflectors are dedicated reflectors added to the optical waveguide 107. Such arrangement of the processing unit 131 being enabled to generate the sweep signal is advantageous as it allows to simplify the design of the optical transmitter, and allows also the optical receiver to have knowledge of the sweep signal which is used in the analysis of the reflected optical signal 125.

In an embodiment the optical receiver 105 comprises the DAC 129 that cooperates with the processing unit 131. In an example, the DAC 129 comprises two outputs connected to two inputs of the optical modulator 119. In another example, the DAC 129 comprises four outputs connected to four inputs of the optical modulator 119, which is suitable for generating complex sounding signals for two polarization modes of the optical waveguide 107.

In an embodiment, the optical transmitter 103 is configurable to generate a first sweep signal and a second sweep signal, through the cooperation with the signal generator 117 in an example.

The first sweep signal, respectively the second sweep signal, is a real signal or a complex signal. In the case the first sweep signal and second sweep signal are real signals, the DAC 129 that interfaces the signal generator 117 and the optical modulator 119 comprises two outputs, each output corresponding to a polarization mode of the optical waveguide 107. In the alternative case where the first sweep signal and the second sweep signal are complex signals, the DAC 129 comprises four outputs, each pair of outputs corresponding to a polarization mode of the optical waveguide 107, and each output of a pair corresponding respectively to in-phase component and in-quadrature component of a complex signal.

The first sweep signal and the second sweep signal are provided to the optical modulator 119 which modulates them with the optical signal provided by the laser source 111. A first polarization mode is modulated by the first sweep signal, and a second polarization mode is modulated by the second sweep signal. The operations of the optical modulator 119 results in the optical sounding signal 123, which is modulated on its two orthogonal polarization modes, respectively by the first sweep signal and the second sweep signal.

In an example, the optical sounding signal 123 is amplified by an EDFA prior to be sent on the optical waveguide 107. In another example, the optical sounding signal 123 is transmitted without further being amplified, in case its power level is sufficient to probe the optical waveguide 107.

In an embodiment, the first sweep signal and the second sweep signal are obtained from a digital sequence. In an example said digital sequence is managed by the signal generator 117.

In an embodiment, the first sweep signal and the second sweep signal are comprised in the digital sequence.

In an embodiment, the signal generator is adapted to select a first portion of the digital sequence for generating the first sweep signal, and to select a second portion of said digital sequence for generating the second sweep signal. In an example, the signal generator 117 selects the portions of the digital sequence based on length of said digital sequence.

In an embodiment, the signal generator 117 is configured to select the first portion based on the first half of the digital sequence, and to select the second portion based on the second half of the digital sequence. The signal generator 117 provides the first sweep signal based on the first portion, and the second sweep signal based on the second portion to the DAC 129 and are then provided to the optical modulator 119.

In an embodiment, the signal generator 117 is further configured to select the first portion based on the second half of the digital sequence, and to select the second portion based on the first half of the digital sequence. The first sweep signal and the second sweep signal are inverted compared to the previous processing by the signal generator 117. The signal generator 117 provides the first sweep signal based on the first portion, and the second sweep signal based on the second portion to the DAC 129 and are then provided to the optical modulator 119.

In an embodiment, the digital sequence is a periodic sequence of values of period T_{sweep}. The signal generator 117 generates the first sweep signal based on the reading of the digital sequence, starting from the first value from the digital sequence. The signal generator 117 generates the second sweep signal based on the reading of the digital sequence, starting with a delay or an offset of T_{sweep}/2.

In an embodiment, the digital sequence is a frequency sweep signal. The instantaneous frequency of the digital sequence varies over time.

In an embodiment, the digital sequence is a substantially linear frequency sweep signal. In an example, the digital sequence is digitally generated with a symbol rate F_{symb} in a bandwidth comprised between 0 and F_{symb}/2, and during a duration or length T_{sweep}. The signal generator 117 generates the first sweep signal so that it corresponds to the values of the digital sequence comprised in the interval [0:T_{sweep}/2[. The signal generator 117 further generates the second sweep signal so that it corresponds to the values of the digital sequence comprised in the interval [T_{sweep}/2 : T_{sweep}[. The first sweep signal and the second sweep signal are provided to the DAC 129, and to the optical modulator 119 for modulating the optical signal from the laser source 111. Then, the signal generator 117 generates the first sweep signal so that it corresponds to the values of the digital sequence comprised in the interval [T_{sweep}/2 : T_{sweep}[. The signal generator 117 further generates the second sweep signal so that it corresponds to the values of the digital sequence comprised in the interval [0:T_{sweep}/2[. The first sweep signal and the second sweep signal are provided to the DAC 129, and to the optical modulator 119 for modulating the optical signal from the laser source 111. In another example the limits of these intervals may be different, including the last value of the digital sequence in an example.

In an embodiment, the signal generator 117 generates the digital sequence and processes it periodically, with a period of T_{sweep}, and generates the first sweep signal and the second sweep signal with an offset or delay of T_{sweep}/2.

In an embodiment, a first digital to analog converter, comprised in the DAC 129 and fed by one of its inputs, converts from the digital domain to the analog domain the first portion of the digital sequence. The first sweep signal is based on said first portion of the digital sequence.

A second digital to analog converter, comprised in the DAC 129 and fed by another of its inputs, converts from the digital domain to the analog domain the second portion of the digital sequence. The second sweep signal is based on said second portion of the digital sequence.

The first sweep signal and second sweep signal are provided by the DAC 129 to the optical modulator 119. In an example the first sweep signal and the second sweep signal modulates respectively the first polarization axis and the second polarization axis of the wavelength generated by the laser source 111 which is a highly coherent laser source, with a coherence in the magnitude of a Hz in an example, or with a coherence in the magnitude of sub-Hz in another example. Laser sources with a coherence in the magnitude of tenth or hundredth of Hz may be used. Indeed, the length of the waveguide to be monitored has an influence on the coherence of the laser source. The longer the waveguide is, the higher the coherence of the laser source is, in the magnitude of Hz or sub-Hz. For shorter range to be probed, such as in an application in the medical field, the constraint on the coherence of the laser source is in the magnitude of kHz or MHz. In case the coherence of the laser source is a parameter that cannot be tuned, said laser coherence has an influence on the length of the waveguide to be proved.

In another embodiment, the signal generator 117 generates the digital sequence based on a phase modulation. In an example, the properties of the phase modulation are such as the digital sequence exhibits a sweep, in particular the module of said digital sequence has a frequency that varies continuously over time. In an example the digital sequence comprises a coded signal which comprises Phase Shift Keying modulated symbols with an order M for a sweep made of 2^{2M} symbols per period. A possible arrangement of the digital sequence is a Phase Shift Keying modulated sequence such as constant-amplitude zero-autocorrelation codes. Other sequences exhibiting phase modulation with sweep of 2^{2M} symbols are usable too.

In an embodiment, the signal generator 117 is configurable to generate the first sweep signal based on the first portion of the digital sequence that comprises the Phase Shift Keying modulated sequence. Similarly, the signal generator 117 is configurable to generate the second sweep signal based on the second portion of the digital sequence that comprises the Phase Shift Keying modulated sequence. In an example, the first portion corresponds to the first half of the Phase Shift Keying modulated or coded signal and the second portion corresponds to the second half of the Phase Shift Keying modulated sequence. The signal generator provides the first sweep signal and the second sweep signal to the DAC 129 which comprises four digital to analog conversion channels. The analog conversions result in two pairs of complex signals that are provided to the optical modulator for modulating in-phase and in-quadrature two polarization modes of the optical waveguide 107. In another example, the first sweep signal is based on a periodic Phase Shift Keying modulated or coded signal of period T_{sweep}. In yet another example, the repetition period may be chosen longer than the T_{sweep}, inducing blanks between two consecutive sweeps. The second sweep signal is based on the same periodic Phase Shift Keying modulated or coded signal but with a delay or offset of -L_{sweep}/2.

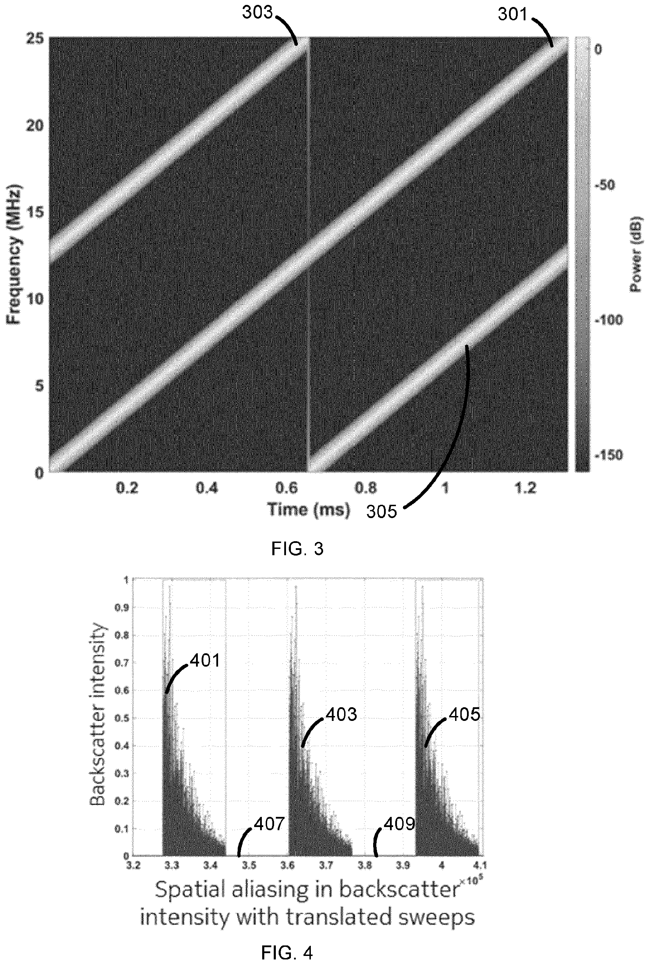

Referring to figure FIG. 3, a diagram of a time-frequency analysis of optical signals obtained by an optical monitoring device according to an embodiment is depicted.

The diagram of figure FIG. 3 corresponds to the time-frequency analysis of the first sweep signal and the second sweep signal generated by the signal generator 117 based on the digital sequence being a linear frequency sweep signal according to an embodiment.

The x-axis corresponds to time and y-axis corresponds to frequency.

The first sweep signal is depicted by the curve 301 which exhibits a substantially linear increase of the frequency in the range of 0 Hz to 25 MHz over time in a duration of approximately 1.3 ms. The first sweep signal modulates the first polarization of the optical signal from the laser source.

The second sweep signal is depicted by the curve 303 and the curve 305. The curve 303 exhibits a substantially linear increase in the range of 12.5 MHz to 25 MHz over the time interval 0 ms to approximately 0.65 ms. The curve 305 exhibits a substantially linear increase in the range of 0 MHz to 12.5 MHz over the time interval approximately 0.65 ms to approximately 1.3 ms.

In other example the frequency ranges and the time intervals of the respective sweep signals are different and suitable for probing the optical waveguide 107.

The curves 301, 303 and 305 are depicted in bright color/white for indicating the higher transmit power used for the first sweep signal and the second sweep signal. The darker areas correspond to absence of transmitted signal.

Referring to figure FIG. 4, a diagram of processing results obtained by an optical monitoring device according to an embodiment is depicted.

In an embodiment the optical monitoring device 101 generates the first sweep signal and the second sweep signal based on a substantially linear frequency sweep. The optical monitoring device 101 outputs the optical sounding signal 123 comprising the first sweep signal and the second sweep signal that modulates the respective first polarization and second polarization of the optical waveguide 107. The optical waveguide reflects partially the optical sounding signal 123 into the reflected optical signal 125. The optical receiver 105 is configured for receiving said reflected optical signal 125.Due to polarization rotation during propagation, the reflected optical signal 125 comprises the reflections of the first sweep signal and the second sweep signal globally, which are then separated after correlation thanks to their specific properties (their instantaneous frequency is always different at any time instant). The optical receiver is further adapted, through its processing functions, to extract the first plurality of reflections 137 corresponding to the first sweep signal being reflected by the plurality of reflectors from the optical waveguide 107. The optical receiver 105 is also adapted for extracting, from the reflected optical signal 125, the second plurality of reflections 139 corresponding to the second sweep signal being reflected by the plurality of reflectors from the optical waveguide 107.

In an embodiment, the processing unit 131 is adapted to process the first plurality of reflections 137 according to the first sweep signal, and to process the second plurality of reflections according to the second sweep signal. In an example the processing unit performs correlations processing on the first plurality of reflections 137 and the first sweep signal, and between the second plurality of reflections 139 and the second sweep signal.

The processing unit 131 performs correlation process on the received and digitized reflections and with the first sweep signal and the second sweep signal provided by the signal generator 111. From this processing, the processing unit 131 is enabled to determine an impulse response estimation of the optical waveguide 103. Indeed, the optical waveguide 107 with its plurality of reflectors bias the optical sounding signal and its reflections. It is then meant by impulse response estimation, an estimation of the optical field of the optical waveguide 107 which comprises parameters characterizing the optical channel such as intensity, state of polarizations, and optical phase of each of the two polarization axes as described by a Jones matrix. As the content of the optical sounding signal is known, the processing unit 131 is able to determine influence of the optical waveguide 107 by comparing through correlations the received first plurality and second plurality of reflections 139. The determination is achieved by extracting the phase from the Jones matrix, or equivalently the impulse response, estimation of the optical waveguide 107.

The optical monitoring device 107 performs multiple impulse response estimations. The processing unit 131 is adapted to detect a modification in the estimations of the impulse response. Such a modification may be caused by a vibration or a change of position of the optical waveguide 107. Conversely constant or almost constant impulse response estimation denotes that no event has occurred on the optical waveguide 107. The processing unit 131 is enabled to determine a disparity between the estimations, in particular a difference of estimated relative phase from the comparison, said disparity originating from an event that has occurred on the optical waveguide 107. The processing unit 131 is then enabled to detect such event.

The figure FIG. 4 depicts the estimated backscattered intensity derived from the correlation results obtained by the processing unit for first sweep signal and second sweep signal based on the digital sequence comprising a substantially linear frequency sweep.

The x-axis corresponds to time and the y-axis corresponds to the Rayleigh backscatter intensity.

The optical waveguide 107 to be monitored by the optical monitoring device is a simulated Single Mode Fiber of length L_{f} = 34 km. The impulse response of the optical waveguide 107 is then 68 km as the optical signal propagates to the end of the optical fiber, then propagates in the opposite direction. The impulse response has then a duration of Tᵢᵣ = 0.328 ms, taking into account the celerity of light in the core of a SMF fiber (200000000m/s approximately).

Considering existing solutions, the interrogation period of the optical waveguide 107 corresponds to at least four times the duration of the impulse response, preventing to use a shorter interrogation period to avoid aliasing effects that would corrupt the measurement

Advantageously, the first sweep signal and the second sweep signal based on substantially linear frequency sweep, the aliasing only occurs during the duration of one impulse response as depicts by the areas 407, 409 in figure FIG. 4. Advantageously, the reduction of the aliasing is achievable thanks to the specific properties of the first sweep signal and the second sweep signal. The areas 401, 403, 405 corresponds to the effective impulse response of the optical waveguide 107, during which the optical monitoring device 101 is enabled to perform measurement that are reflective of the state of the optical waveguide 107. The optical monitoring device 101 offers an interrogation period of two impulse responses. It is then possible to increase the number of measurements thanks to the short interrogation period. Increasing the number of measurements is advantageous as it allows to monitor events with a finer time granularity. The increase of the number of measurements allows then to cover a higher mechanical bandwidth, as it is possible to detect mechanical events such as vibration or physical modifications on the optical waveguide 107 occurring at a higher frequency.

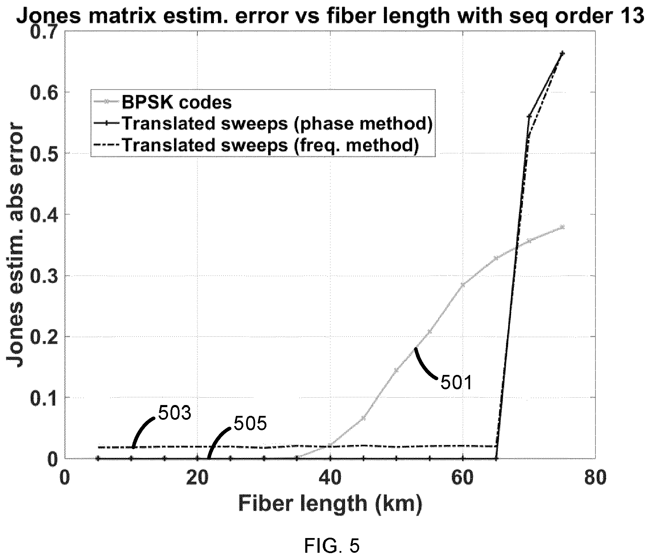

Referring to figure FIG. 5, a diagram of resulting errors obtained by an optical monitoring device according to an embodiment is depicted.

The x-axis corresponds to the length of the optical waveguide 107 under monitoring. The y-axis corresponds to the absolute error in the Jones matrix estimation.

The curve 501 corresponds to existing solutions based on a Binary Phase Shift Keying code probing sequence. The absolute error of the Jones matrix estimation deviates approximately for a fiber length of 35 km.

The curve 503 corresponds to the optical monitoring device 101 operating with a linear frequency sweep according to an embodiment. The absolute error of the Jones matrix estimation deviates approximately for a fiber length of 65 km.

The curve 505 corresponds to the optical monitoring device 101 operating with a PSK coded signal according to an embodiment. The absolute error of the Jones matrix estimation deviates approximately for a fiber length of 65 km.

Advantageously, the optical monitoring device 107 enables to perform measurements at a period corresponding to two times the duration of the impulse response instead of four times. For a laser source 111 with a specific coherence length or time, the optical monitoring device 107 allows then to probe longer optical waveguide 107. For an optical waveguide 107 with a specific length, the optical monitoring device allows then to use a laser source with a smaller coherence time or length.

In an embodiment, the optical monitoring device 101 performs the following steps in any possible order:
- generating the first sweep signal and the second sweep signal,
- transmitting the first polarization mode of the optical waveguide modulated with the first sweep signal,
- transmitting the second polarization mode of the optical waveguide modulated with the second sweep signal,
- receiving the first plurality of reflections 137 corresponding to the first sweep signal being reflected by the plurality of reflectors,
- receiving the second plurality of reflections 139 corresponding to the second sweep signal being reflected by the plurality of reflectors,
- processing the first plurality of reflections 137 according to the first sweep signal, and processing the second plurality of reflections 139 according to the second sweep signal, for determining and event that occurred on the optical waveguide.

In an embodiment, the entities of the optical monitoring device 101 such as the optical transmitter 103, the optical receiver 105, the processing unit 131, respectively comprise one or more processors, and memory storing instructions that, when executed by the one or more processors cause the optical monitoring device to monitor the optical waveguide 107 and enable the determining of event that occurred on said optical waveguide 107.

The functions of the various elements shown in the set of figures, including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

## Claims

1. An optical monitoring device (101) comprising:
- an optical transmitter (103),
- an optical receiver (105),
- an optical waveguide (107) comprising a plurality of reflectors,
- the optical transmitter (103) being configurable to transmit on the optical waveguide:
∘ a first sweep signal modulating a first polarization mode of said optical waveguide (107), and
∘ a second sweep signal modulating a second polarization mode of said optical waveguide (107),
- the optical receiver (105) being configurable to receive:
∘ a first plurality of reflections corresponding to the first sweep signal being reflected by the plurality of reflectors, and
∘ a second plurality of reflections corresponding to the second sweep signal being reflected by the plurality of reflectors,
- a processing unit (131) configurable to process the first plurality of reflections according to the first sweep signal, and to process the second plurality of reflections according to the second sweep signal, for determining an event that occurred on the optical waveguide (107).

2. An optical monitoring device (101) according to claim 1, wherein the optical transmitter (103) is further configurable:
- to generate a digital sequence,
- to generate the first sweep signal based on a first portion of the digital sequence,
- to generate the second sweep signal based on a second portion of the digital sequence.

3. An optical monitoring device (101) according to claim 1 or claim 2, wherein the optical transmitter (103) is further configurable:
- to generate the first sweep signal based on the second portion of the digital sequence,
- to generate the second sweep signal based on the first portion of the digital sequence.

4. An optical monitoring device (101) according to any of the claims 2 to 3, wherein the optical transmitter (103) is further configurable:
- to select the first portion of the digital sequence, and
- to select the second portion of the digital sequence according to a length of the digital sequence.

5. An optical monitoring device (101) according to any of the claims 2 to 4, wherein the optical transmitter (103) is further configurable:
- to select the first portion according to the first half of the digital sequence, and
- to select the second portion according to the second half of the digital sequence.

6. An optical monitoring device (101) according to any of the claims 1 to 5, wherein the processing unit (131) is configurable:
- to correlate the first plurality of reflections with the first sweep signal, and,
- to correlate the second plurality of reflections with the second sweep signal,
- for determining the event that occurred on the optical waveguide (107).

7. An optical monitoring device (101) according to any of the claims 1 to 6, wherein the optical transmitter (103) is configurable:
- to modulate the first polarization mode with the first sweep signal based on a first substantially linear frequency sweep signal, and
- to modulate the second polarization mode with the second sweep signal based on a second substantially linear frequency sweep signal.

8. An optical monitoring device (101) according to claim 2 and claim 7, wherein the first substantially linear frequency sweep signal is based on the first portion of the digital sequence, and the second substantially linear frequency sweep signal is based on the second portion of the digital sequence.

9. An optical monitoring device (101) according to 8 wherein the first portion of the digital sequence is based on a first half of said digital sequence, and the second portion of the digital sequence is based on a second half of said digital sequence, and the optical transmitter (103) is configurable to transmit substantially simultaneously the first sweep signal and the second sweep signal.

10. An optical monitoring device (101) according to any claims 1 to 6, wherein the optical transmitter (103) is configurable:
- to modulate the first polarization mode with the first sweep signal based on a first Phase Shift Keying coded signal, and
- to modulate the second polarization mode with the second sweep signal based on a second Phase Shift Keying coded signal.

11. An optical monitoring device (101) according to claim 10, wherein the first Phase Shift Keying coded signal is based on the first portion of the digital sequence, and the second Phase Shift Keying coded signal is based on the second portion of the digital sequence.

12. An optical monitoring device (101) according to claim 11 wherein the first portion of the digital sequence is based on a first half of said digital sequence, and the second portion of the digital sequence is based on a second half of said digital sequence, and the optical transmitter (103) is configurable to transmit substantially simultaneously the first sweep signal and the second sweep signal.

13. An optical monitoring device (101) according to any of the claims 10 to 12, wherein the first Phase Shift Keying coded signal and the second Phase Shift Keying coded signal are comprised in a sequence of constant amplitude zero-autocorrelation codes.

14. A method for monitoring an optical waveguide (107), said optical waveguide (107) connecting an optical transmitter (103) and an optical receiver (105), said optical waveguide (107) comprising a plurality of reflectors, the method comprising the following steps:
- generating a first sweep signal and a second sweep signal,
- transmitting a first polarization mode of the optical waveguide (107) modulated with the first sweep signal,
- transmitting a second polarization mode of the optical waveguide (107) modulated with the second sweep signal,
- receiving a first plurality of reflections corresponding to the first sweep signal being reflected by the plurality of reflectors,
- receiving a second plurality of reflections corresponding to the second sweep signal being reflected by the plurality of reflectors,
- processing the first plurality of reflections according to the first sweep signal, and processing the second plurality of reflections according to the second sweep signal, for determining and event that occurred on the optical waveguide.
